# FASCICULE DE BREVET EUROPEEN

(11) **EP 3 604 020 B1**
(45) Date de publication et mention de la délivrance du brevet: **03.01.2024**
(21) Numéro de dépôt: 19197685.1
(22) Date de dépôt: 23.01.2013
(51) Int. Cl.: B60L 3/00, B60L 58/40, B60L 58/22, B60L 58/20, B60L 53/14, B60L 50/62, B60L 50/51, H02J 7/14, H02J 7/00, H02J 1/06, B60L 58/10, H02J 7/34

(54) **GESTION COMBINÉE DE DEUX SOURCES DE TENSION**
KOMBINIERTE STEUERUNG VON ZWEI SPANNUNGSQUELLEN
COMBINED MANAGEMENT OF TWO VOLTAGE SOURCES

(30) Priorité: 23.01.2012 FR 1250626
(43) Date de publication de la demande: 05.02.2020
(62) Demande divisionnaire de: 13701081.5
(73) Titulaire: Commissariat à l'Energie Atomique et aux Energies Alternatives, 75015 Paris (FR)
(72) Inventeur: DESPESSE, Ghislain, 38340 VOREPPE (FR)
(74) Mandataire: Novaimo

(56) Documents cités:
- EP-A1- 0 808 738
- EP-A1- 2 388 902
- EP-A2- 2 374 651
- WO-A1-2009/021909
- WO-A1-2011/016135
- WO-A1-2011/102543
- WO-A1-2011/121035
- DE-A1-102009 028 965
- TW-A- 201 116 442
- US-A1- 2006 232 238
- US-A1- 2008 191 663
- US-A1- 2011 048 825

## Description

L'invention concerne un système de gestion électrique comprenant deux sources de tension de niveaux de tension différents, bas et haut, particulièrement adapté à un véhicule automobile. Elle porte aussi sur un système comme un véhicule automobile en tant que tel comprenant un tel système de gestion électrique. Enfin, elle porte aussi sur un procédé de gestion d'un tel système électrique.

Un véhicule automobile à entraînement électrique, totalement électrique ou hybride, dispose d'une batterie de puissance qui fonctionne avec un premier niveau de haute tension, qui peut par exemple atteindre 300 V, afin de pouvoir alimenter électriquement le moteur d'entraînement du véhicule automobile. Pour cette raison, nous appelons batterie d'entraînement une telle batterie. Un tel véhicule automobile est de plus équipé de manière classique d'une batterie de bord, qui fonctionne avec un second niveau de tension inférieur au premier, de basse tension, qui peut par exemple être de l'ordre de 12 V. Cette batterie de bord a pour fonction l'alimentation électrique de tous les autres composants électrique à plus faible consommation du véhicule. Un tel véhicule automobile doit gérer ses deux batteries différentes, gérer leur phase de charge et décharge et garantir qu'elles délivrent la puissance requise par le véhicule automobile à tout instant.

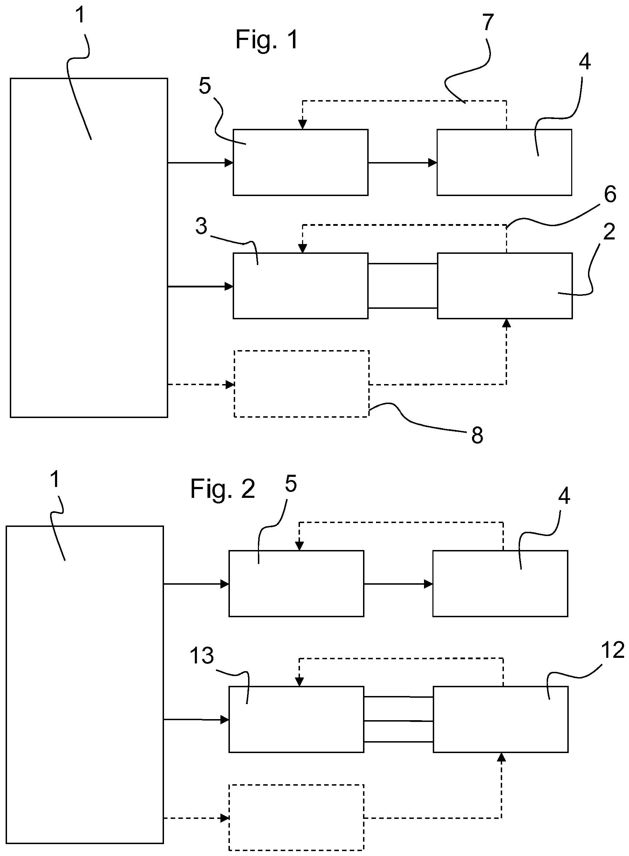

La figure 1 représente une première solution de l'état de la technique, dans laquelle un véhicule automobile électrique comprend une batterie d'entraînement 1 prévue pour l'alimentation d'un moteur d'entraînement 2 à courant continu par l'intermédiaire d'un convertisseur DC/DC 3. Le moteur d'entraînement 2 peut remonter certaines informations représentant son état par une liaison de communication 6 pour permettre une gestion intelligente de son alimentation. Dans une telle solution, la batterie de bord 4 du véhicule automobile est aussi reliée à la batterie d'entraînement 1 du véhicule automobile, qui remplit une seconde fonction de charge de la batterie de bord 4, par l'intermédiaire d'un second convertisseur DC/DC 5, qui remplit une fonction de chargeur de la batterie de bord 4. Ce second convertisseur DC/DC 5 a un premier effet d'ajustement de la tension et/ou du courant transmis à la batterie de bord 4 pour permettre sa charge dans les conditions optimales, et a pour second effet d'assurer une isolation galvanique entre la batterie d'entraînement 1 et la batterie de bord 4. Cette dernière transmet des informations sur son état par une liaison de communication 7 pour mettre en oeuvre une gestion intelligente de son fonctionnement, notamment de sa recharge. Enfin, de manière optionnelle pour le cas où le moteur d'entraînement est à excitation bobinée, le système comprend un troisième convertisseur DC/DC 8 relié au moteur d'entraînement 2.

La figure 2 représente une seconde solution de l'état de la technique, qui diffère de la solution précédente en ce que le moteur d'entraînement 12 du véhicule automobile est un moteur triphasé, asynchrone, ou par exemple de type synchrone à aimant permanent ou synchrone à excitation bobinée, qui est relié à la batterie d'entraînement 1 par l'intermédiaire d'un onduleur 13. Le reste du système reste similaire à la première solution décrite ci-dessus.

Les solutions existantes pour gérer la cohabitation de deux batteries de niveaux de tension différents dans un véhicule automobile sont insuffisantes, utilisent un système de gestion électrique complexe et coûteux, et des procédés non optimisés, comme par exemple dans les documents WO2011102543 A1 ou EP0808738 A1 ayant servi de base à la présentation en deux parties de la revendication 1.

Ainsi, il existe un besoin d'une solution améliorée de gestion de la cohabitation de deux batteries de niveaux de tension différents au sein d'un même système.

L'invention est définie par la revendication 1 portant sur un système de gestion électrique et par la revendication 16 portant sur un procédé de gestion d'un système de gestion électrique.Des modes de réalisation de l' invention sont définis dans les revendications dépendantes.

Ces objets, caractéristiques et avantages de la présente invention seront exposés en détail dans la description suivante de modes de réalisation particuliers en relation avec les figures jointes parmi lesquelles :
La figure 1 représente schématiquement un système de gestion des batteries d'un véhicule automobile selon une première solution de l'état de la technique.
La figure 2 représente schématiquement un système de gestion des batteries d'un véhicule automobile selon une seconde solution de l'état de la technique.
La figure 3 représente schématiquement un système de gestion des batteries d'un véhicule automobile selon le mode de réalisation de l'invention.
La figure 4 représente schématiquement un système de gestion des batteries d'un véhicule automobile selon une variante du mode de réalisation de l'invention.
La figure 5 représente schématiquement un système de gestion des batteries d'un véhicule automobile selon une autre variante du mode de réalisation de l'invention.
La figure 6 représente des détails du système de gestion des batteries d'un véhicule automobile selon le mode de réalisation de la figure 3.
La figure 7 représente un schéma électrique simplifié du système de gestion des batteries d'un véhicule automobile des modes de réalisation de l'invention.
Les figures 8 à 11 représentent différentes variantes de réalisation d'un chargeur de batterie de bord d'un véhicule automobile adapté aux modes de réalisation selon l'une des réalisations précédentes.
Les figures 12 à 15 représentent différentes variantes de réalisation avec isolation galvanique d'un chargeur de batterie de bord d'un véhicule automobile adapté aux modes de réalisation selon l'une des réalisations précédentes.
La figure 16 représente des courbes d'évolution de grandeurs électriques en fonction du temps lors de la mise en oeuvre d'un procédé de gestion d'un système électrique selon un mode de réalisation de l'invention.
Les figures 17 à 21 représentent différentes variantes d'architecture intégrée de la batterie d'entraînement et de la batterie de bord selon des modes de réalisation de l'invention.

Dans la description suivante, les mêmes références seront utilisées pour des éléments similaires sur les différentes figures, pour une raison de simplification de la compréhension.

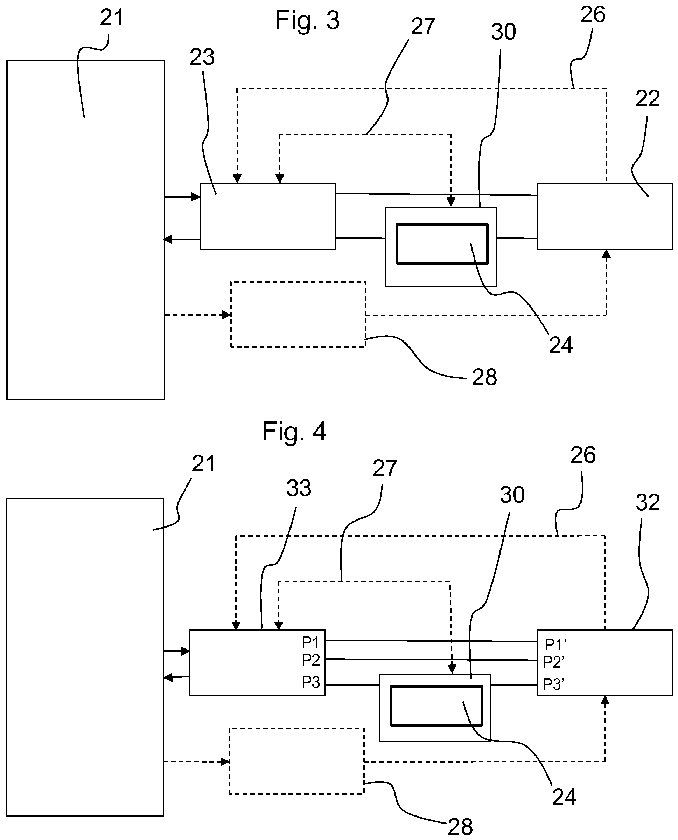

La figure 3 représente ainsi schématiquement un mode de réalisation de l'invention, dans lequel le système de gestion des batteries du véhicule automobile repose sur la disposition en série sur un circuit de liaison reliant la batterie d'entraînement 21 du véhicule automobile et son moteur d'entraînement 22 d'un dispositif comprenant la batterie de bord 24 du véhicule, qui participe à la gestion de la charge de cette batterie de bord ; pour cette raison, nous appellerons simplement chargeur 30 ce dispositif placé en série. Un convertisseur DC/DC 23 est de plus relié à la batterie d'entraînement. De manière similaire à la solution décrite en référence avec la figure 1, un autre convertisseur DC/DC 28 peut relier la batterie d'entraînement 21 au moteur d'entraînement 22 pour l'alimentation de l'excitation éventuelle dans le cas d'un moteur à excitation bobinée. Enfin, des liaisons de communication 26, 27 permettent la transmission de données représentant respectivement l'état du moteur d'entraînement 22 et de la batterie de bord 24 vers le convertisseur DC/DC 23, qui comprend des composants matériel (hardware) et/ou logiciel (software), afin de mettre en oeuvre la gestion intelligente de l'ensemble du système de gestion, comprenant notamment le pilotage du moteur d'entraînement et de la charge de la batterie de bord par l'intermédiaire du chargeur 30, comme cela sera expliqué plus tard.

La figure 4 représente la variante de la réalisation précédente dans le cas d'un moteur triphasé. Dans cette variante, le moteur est un moteur triphasé 32, et le convertisseur DC/DC 23 est remplacé par un onduleur 33.

Grâce au système représenté sur les figures 3 et 4, la batterie de bord 24 du véhicule automobile peut être rechargée dès qu'un courant circule vers ou depuis le moteur d'entraînement 22, 32. Une voie de contournement (by-pass), non représentée, gérée par le chargeur 30, permet ou non au courant de traverser la batterie de bord 24 du véhicule, selon son état de charge. Ce système est simplifié par rapport aux solutions de l'état de la technique représentées par les figures 1 et 2, notamment en ce qu'il comprend un convertisseur DC/DC de moins, puisqu'il ne prévoit pas un tel convertisseur indépendant pour la charge de la batterie de bord 24 du véhicule automobile. Le système proposé permet de placer le système de charge de la batterie de bord en série avec le circuit d'alimentation du moteur, de façon à exploiter l'onduleur ou le convertisseur DC/DC d'alimentation du moteur d'entraînement comme moyen d'adapter la tension ou le courant aux besoins de la batterie de bord à charger.

Dans les deux réalisations des figures 3 et 4, l'onduleur 33 ou le convertisseur DC/DC 23 pilote le moteur d'entraînement 32, 22 du véhicule automobile, par l'intermédiaire du courant qui lui est transmis. Pour cela, il ajuste automatiquement sa tension de sortie pour atteindre le courant de consigne du moteur d'entraînement, et s'adapte en même temps automatiquement à la présence ou non de la batterie du réseau de bord placée ou non en série avec le moteur d'entraînement, par l'intermédiaire du chargeur 30. Ce fonctionnement se fait dans la limite d'une saturation de la tension de sortie de l'onduleur 33 ou du convertisseur DC/DC 23. Si on s'approche de cette saturation ou si la batterie du réseau de bord est suffisamment chargée, cette batterie peut être isolée du reste du système, by-passée.

Si le moteur d'entraînement est plutôt contrôlé en tension, l'onduleur 33 ou le convertisseur DC/DC 23 est informé de la mise en série ou non de la batterie de bord 24 afin de la prendre en compte et de compenser sur sa sortie la chute de tension associée à la mise en série de la batterie de bord.

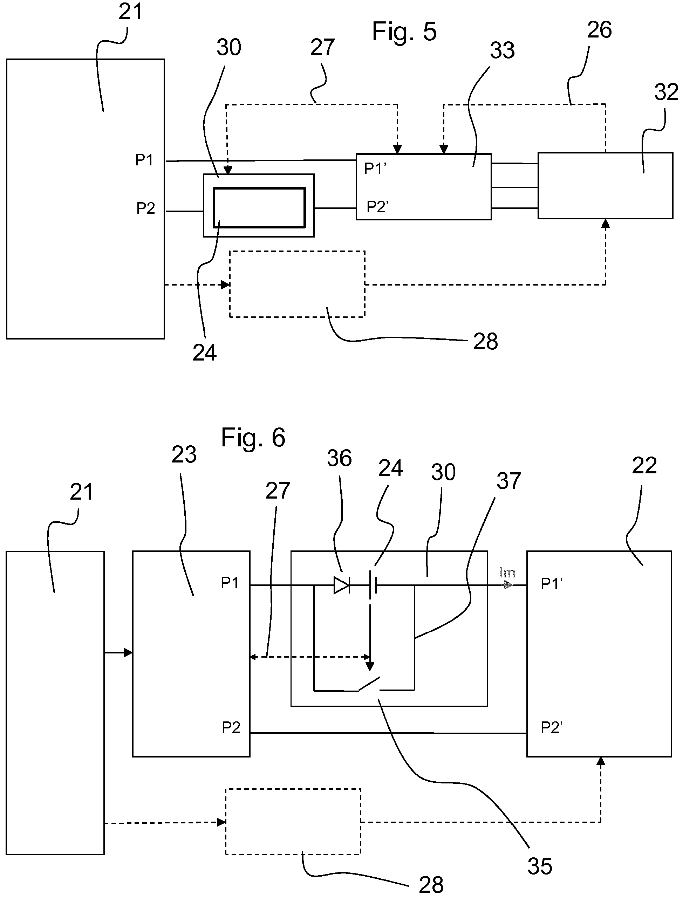

La figure 5 représente une variante de réalisation du mode de réalisation de la figure 4, dans laquelle l'onduleur 33 est disposé entre le chargeur 30 relié à la batterie de bord 24 et le moteur d'entraînement 32. Cette variante présente notamment l'avantage d'intégrer le chargeur 30 de la batterie de bord 24 sur un chemin de puissance à deux fils seulement (inversion du courant uniquement au freinage), et non sur le système triphasé qui peut présenter plus de puissance réactive et rendre plus complexe la gestion de la recharge de la batterie (inversion possible transitoire du courant à chaque période électrique). Ainsi, il apparaît plus généralement que le chargeur 30 de la batterie de bord 24 peut être placé en amont ou en aval du convertisseur DC/DC ou de l'onduleur servant à l'alimentation du moteur ou de son excitation, sur les modes de réalisation des figures 3 et 4.

La figure 6 représente plus en détail un lien possible entre le chargeur 30 et la batterie de bord 24 dans le mode de réalisation de la figure 3. Ce chargeur 30 comprend une diode 36 et un interrupteur 35 sur une voie de contournement 37 de la batterie de bord 24. La diode 36 est en série avec la batterie de bord 24 et permet de garantir le passage d'un courant Im positif pour la charge de la batterie de bord 24. Cette diode peut en variante être remplacée par un interrupteur contrôlé qui n'est fermé, et donc passant, que lorsque le courant lm est positif. De plus, lorsque l'interrupteur 35 est fermé, la batterie de bord 24 est by-passée du système de gestion, n'est plus reliée à la batterie d'entraînement 21 du véhicule et le chargeur 30 ne met plus en oeuvre sa charge. Naturellement, une variante de réalisation équivalente peut être mise en oeuvre dans le cas d'un moteur triphasé, selon la représentation de la figure 4, en plaçant le chargeur 30 similaire en série sur une des phases du moteur ou en amont du convertisseur et/ou de l'onduleur, ou en le plaçant sur la ligne d'alimentation de l'excitation du moteur. Dans ces réalisations, le chargeur 30 permet donc de disposer (ou d'isoler) la batterie de bord 24 en série avec la batterie d'entraînement 21 et le moteur 22.

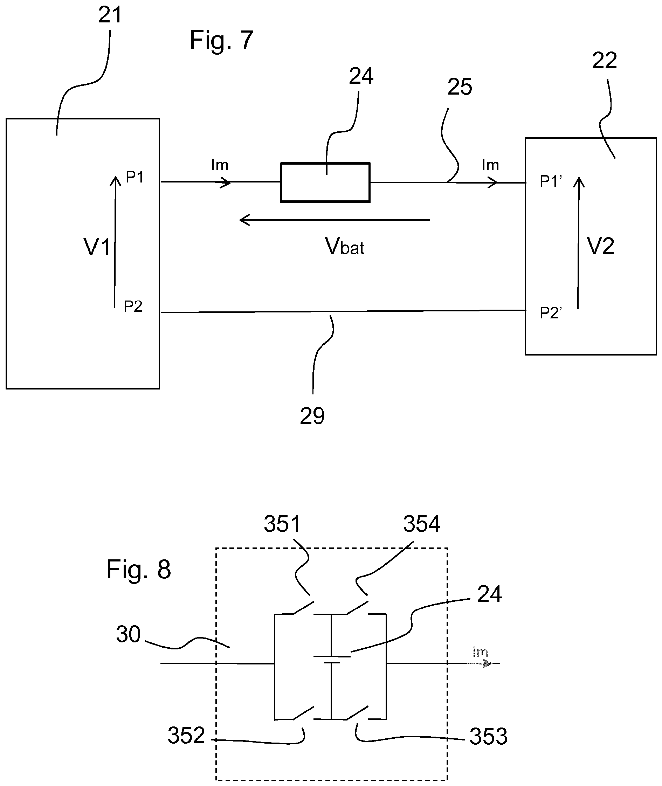

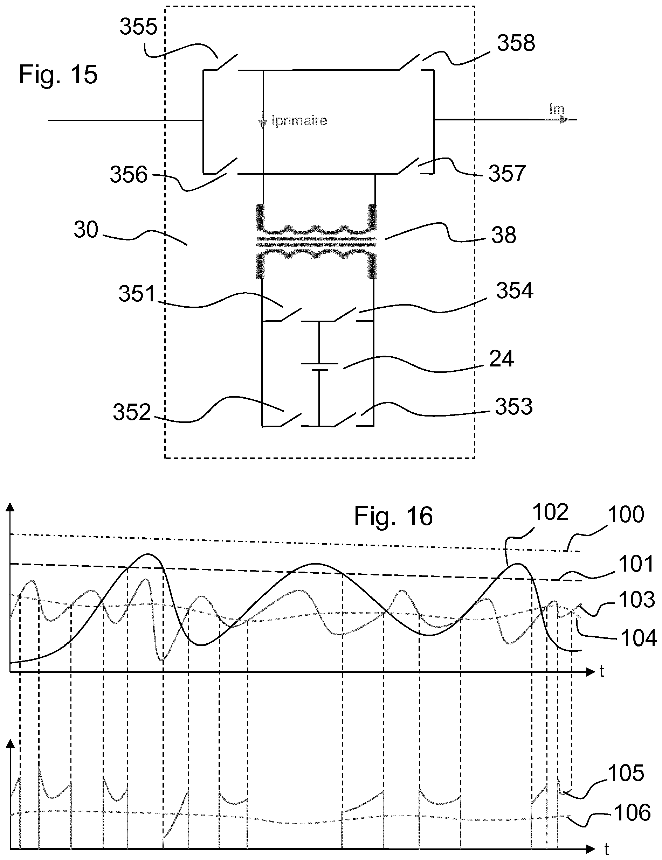

Finalement, la figure 7 représente de manière simplifiée le schéma électrique des modes de réalisation précédents, dans lesquels l'onduleur 33 ou le convertisseur DC/DC 23 peuvent être considérés comme appartenant à une première source de tension (comprenant la batterie d'entraînement 21) s'ils sont disposés en amont de la batterie de bord 24, comme dans les réalisations représentées par les figures 3, 4, 6, ou appartenant à la charge 22 s'ils sont disposés en aval de la batterie de bord 24, comme dans la réalisation représentée en figure 5. Dans tous les cas, la première source de tension alimente la charge par l'intermédiaire de la connexion de ses bornes P1, P2 et éventuellement P3 dans le cas du triphasé. Les bornes P1, P2, P3 sont à des potentiels différents et dans le cas représenté en figure 1 on appelle V1 la tension d'alimentation entre les bornes P1 et P2. De façon complémentaire, la charge est alimentée par ses bornes d'entrée P1', P2' et éventuellement P3' portées à des potentiels différents (différence de potentiel V2 entre les bornes P1' et P2'). Cette connexion entre la première source de tension et la charge est obtenue par une première liaison 25 reliant les premières bornes P1, P1' respectivement de la première source de tension et la charge, par une deuxième liaison 29 reliant leurs secondes bornes P2, P2' et éventuellement une troisième liaison (non représentée) entre les bornes P3 et P3'. Un circuit de liaison est ainsi formé par les première, deuxième et éventuelle troisième liaisons 25, 29 entre la première source de tension et la charge, par lequel la première source de tension alimente la charge. La batterie de bord 24 est disposée sur une des liaisons de ce chemin de puissance, notamment la première liaison 25 sur la figure 7, ou en variante non représentée sur la deuxième ou troisième liaison 29. Dans cette construction, la batterie de bord 24 est donc montée en série sur le circuit de liaison (sur un chemin de puissance) agencé entre la première source de tension et la charge. Dans l'exemple de la figure 7, cette batterie de bord 24 est traversée par un courant Im, qui est aussi le courant d'alimentation de la charge. Elle entraîne une chute de tension V_{bat} entre les bornes P1 et P2. La tension V_{bat} s'ajoute à la tension V2 aux bornes de la charge. En effet, la relation suivante est vérifiée sur ce circuit : V1 = V2 + V_{bat}. Cette relation entre les différentes tensions du circuit de puissance est aussi illustrée par la suite en relation avec la figure 16.

En remarque, les explications précédentes s'appliquent aussi dans le cas d'un mode de réalisation triphasé, comme représenté sur la figure 4, la batterie de bord se trouvant sur une des trois liaisons de puissance reliant la première source de tension à la charge.

Les figures 8 à 11 représentent des variantes de réalisation du chargeur 30 pour la batterie de bord 24 du véhicule automobile. Ces variantes de réalisation permettent notamment la recharge de la batterie de bord 24 quel que soit le sens du courant lm sur le circuit de liaison reliant la batterie d'entraînement 21 au moteur 22.

La première réalisation illustrée sur la figure 8 comprend quatre interrupteurs 351 à 354 aménagés autour de la batterie de bord 24. Cette réalisation peut prendre les trois configurations suivantes :
- lorsque les deux interrupteurs 352 et 353 sont fermés et les deux autres 351 et 354 ouverts, la batterie de bord 24 est by-passée, isolée du reste du système ;
- lorsque le courant lm est positif, la fermeture des interrupteurs 351 et 353 et l'ouverture des deux autres permet de recharger la batterie ;
- lorsque le courant lm est négatif, la fermeture des interrupteurs 352 et 354 et l'ouverture des deux autres permet aussi de recharger la batterie.

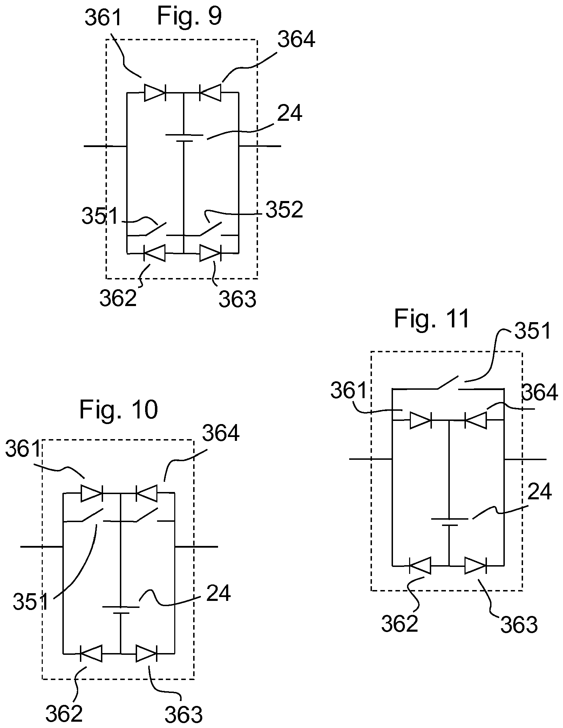

Les figures 9 à 11 illustrent différentes variantes qui permettent de réduire le nombre d'interrupteurs de la réalisation de la figure 8, tout en obtenant un fonctionnement sensiblement équivalent. Ces réalisations sont basées sur un pont de diodes 361 à 364, qui permet la charge de la batterie de bord 24 quel que soit le signe du courant Im, et sur au moins un interrupteur 351 pour permettre le by-pass de la batterie de bord 24.

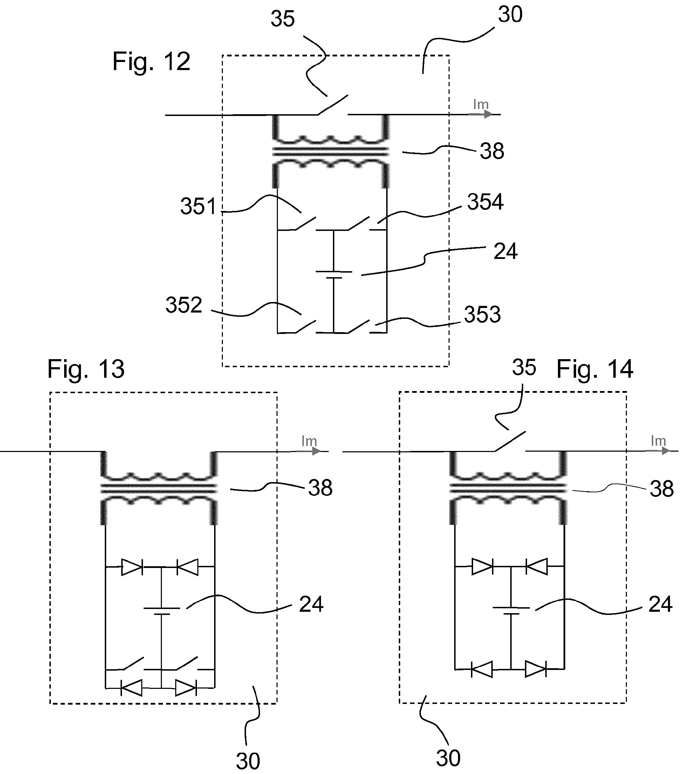

Les figures 12 à 15 représentent des variantes de réalisation du chargeur 30 pour la batterie de bord 24 du véhicule automobile. Ces variantes de réalisation permettent la recharge de la batterie de bord 24, en présence d'un courant Im de sens quelconque sur le circuit de liaison entre la batterie d'entraînement et le moteur, comme dans les réalisations précédentes, tout en assurant une isolation galvanique de la batterie de bord 24 par rapport à la batterie d'entraînement 21 du véhicule automobile, ce qui est très avantageux pour une raison de sécurité dans certaines implémentations comme au sein d'un véhicule automobile, un outil électroportatif, un vélo, un bus ou un bateau électrique, une station de stockage d'énergie servant de tampon énergétique au réseau électrique, une installation solaire (les cellules solaires remplaçant la batterie d'entrainement 1 et le chargeur 30 étant placé en amont ou en aval de l'onduleur qui renvoie l'énergie sur le secteur)...

Ainsi, les variantes de réalisation du chargeur 30, illustrées par les figures 12 à 15, comprennent un transformateur 38 de courant, dont le circuit primaire est disposé directement sur le circuit de liaison reliant la batterie d'entraînement au moteur. La batterie de bord 24 du véhicule est disposée sur le circuit secondaire du transformateur 38, par l'intermédiaire de composants similaires aux réalisations des figures 8 à 11, c'est-à-dire un pont de diodes et/ou des interrupteurs, pour permettre la charge de la batterie de bord quel que soit le courant lm circulant entre la batterie d'entraînement et le moteur, et donc quel que soit le sens du courant induit sur le circuit secondaire du transformateur 38.

Pour dériver le courant de la batterie de bord lorsque celle-ci est chargée ou si on souhaite éviter une chute de tension sur la ligne de puissance, il est possible soit de fermer un interrupteur 35 disposé au niveau du circuit primaire, soit de fermer les interrupteurs 352 et 353, ou les interrupteurs 351 et 354 du circuit secondaire. L'utilisation de l'interrupteur 35 du circuit primaire présente l'avantage de shunter le transformateur 38 de courant, qui peut présenter une certaine chute de tension résistive, en même temps que la batterie de bord 24. Alternativement, le by-pass du courant au niveau du circuit secondaire présente l'avantage dans certains cas de profiter du comportement légèrement inductif du transformateur 38, qui peut alors améliorer le lissage du courant sur le chemin de puissance entre la batterie d'entraînement et le moteur.

Le transformateur 38 remplit une fonction d'isolation galvanique du circuit secondaire, et donc de la batterie de bord 24 du véhicule. La taille du transformateur est définie en fonction notamment de la fréquence du courant appliqué : plus la fréquence de ce courant Im est élevé, plus cette taille peut être réduite car moins le transformateur risquera de saturer. Le rapport de transformation est quand à lui dimensionné de façon à ce que le courant moyen au secondaire par rapport au courant moyen du chemin de puissance soit satisfaisant pour maintenir une charge suffisante de la batterie de bord. Dans ces réalisations, le chargeur 30 reste disposé en série avec la batterie d'entraînement et le moteur, et permet la liaison ou l'isolement de la batterie de bord du véhicule avec le circuit de liaison reliant la batterie d'entraînement au moteur.

La variante de la figure 15 comprend un dispositif agencé sur le circuit primaire prévu pour inverser le courant du circuit primaire, qui comprend quatre interrupteurs 355 à 358 de manière similaire à la solution décrite en référence avec la figure 8. Ce circuit primaire permet la mise en oeuvre d'une inversion du courant lm circulant entre la batterie d'entraînement et le moteur et entrant dans le chargeur 30. Ce hachage/inversion de courant peut se faire à une fréquence relativement élevée comparée à la fréquence naturelle du courant du circuit primaire (ex : 10 kHz), ce qui permet de réduire la taille du transformateur. L'utilisation de cet inverseur primaire est notamment important quand le courant lm est continu ou quasi-continu, ou à basse fréquence (par exemple inférieure à 50 Hz), pour permettre au transformateur 38 d'induire un courant au circuit secondaire. Le courant Iprimaire ainsi transmis au transformateur 38 est égal au courant lm entrant dans le chargeur 30 lorsque les interrupteurs 355 et 357 sont fermés, les deux autres étant ouverts, et à la valeur inversée -lm lorsque les interrupteurs 356 et 358 sont fermés, les deux autres étant ouverts. En alternant les fermetures des paires d'interrupteurs 355, 357 et 356,358 mentionnées ci-dessus, selon une haute fréquence par exemple supérieure à 10 KHz, on génère ainsi un courant alternatif au niveau du circuit primaire qui permet au transformateur 38 de fonctionner de manière optimale. Lorsque la batterie de bord 24 est chargée ou lorsqu'on souhaite éviter une chute de tension sur le système, la batterie de bord 24 peut être déconnectée du système par exemple en fermant les interrupteurs 355 et 358, et/ou 356 et 357 du dispositif agencé au niveau du circuit primaire du transformateur 38 du chargeur 30.

En remarque, les variantes de réalisation représentées sur les figures 9 à 11 peuvent aussi être en variante implémentées au niveau du circuit secondaire du transformateur 38, en remplacement de la solution représentée sur la figure 15, comme illustré à titre d'exemple par les figures 13 et 14.

En remarque, dans toutes les réalisations précédentes, les interrupteurs mentionnés peuvent être de toute nature, par exemple des relais, ou des transistors MOS, bipolaires, thyristors, MOSFET, FET, etc., ou de type diode, basés sur des technologies Silicium, Carbure de silicium, Arséniure de Gallium, SOI ou autres...

Le système de gestion électrique comprend un bloc de pilotage, non directement représenté sur les figures précédentes, qui peut correspondre à tout moyen matériel (hardware) et/ou logiciel (software) d'une unité de gestion intelligente, comprenant au moins un calculateur, par exemple un ou plusieurs microprocesseurs, pour mettre en oeuvre un procédé de pilotage. Cette unité de gestion (ou bloc de pilotage) peut être disposée ou intégrée au sein d'un convertisseur DC/DC ou d'un onduleur, comme évoqué précédemment, ou être toute unité indépendante reliée au système de gestion électrique par un dispositif de communication. Cette unité de gestion pilote ainsi la liaison ou non de la batterie de bord avec le circuit de liaison reliant la batterie d'entraînement et le moteur, en configuration série sur ce circuit de liaison ou de manière indirecte au travers une isolation galvanique, pour atteindre ou non une configuration de charge de la batterie de bord.

Ce procédé de gestion du système électrique repose d'abord sur une régulation de paramètres électriques et/ou mécaniques du moteur d'entraînement, comme par exemple un couple, une vitesse, une accélération ou une combinaison de ces paramètres, sur la base d'une consigne fournie par un utilisateur du système. Cette consigne induit une valeur minimale de la tension en entrée du convertisseur DC/DC ou de l'onduleur des systèmes décrits précédemment. L'unité de gestion autorise ou non la mise en série de la batterie de bord en fonction de cette tension minimale, pour éviter que la chute de tension qui serait engendrée diminue la tension disponible pour le moteur d'entraînement sous la valeur minimale calculée. En complément, l'état de la batterie de bord est aussi pris en compte, puisque sa mise en configuration de charge n'est pas nécessaire si sa charge n'est pas requise. Finalement, lorsque la batterie de bord, ou au moins son chargeur associé, est mise en série sur le circuit de liaison reliant la batterie d'entraînement au moteur, la chute de tension qu'elle engendre est prise en compte par le système de gestion électrique qui la compense aussitôt pour respecter la consigne fournie.

Pour limiter des éventuels retours de courant sur la batterie d'entraînement 21 qui seraient induits par la présence éventuelle d'une puissance réactive lorsque l'on alimente le moteur 22, la batterie de bord peut, de manière privilégiée, être connectée en série lorsque ce courant de retour apparait afin d'absorber une partie de l'énergie associée. Pour cela, le procédé de gestion comprend une étape de détection d'un courant de retour, et prend en compte une telle détection pour favoriser la liaison en série de la batterie de bord. Ceci permet de limiter les microcycles que peut subir la batterie d'entraînement si une puissance réactive est présente sur le chemin de puissance en amont du convertisseur 23, ou 33, (c'est-à-dire comprenant un courant positif sur une partie de la période électrique puis négatif sur une deuxième partie, comme cela peut survenir par exemple lorsque l'on alimente un moteur asynchrone monophasé).

D'autre part, le chargeur de la batterie de bord comprend de même une intelligence, par l'intermédiaire d'un calculateur et de moyens matériel (hardware) et/ou logiciel (software), qui met en oeuvre un procédé de charge de la batterie de bord du véhicule en définissant notamment une consigne de courant (moyen) optimale pour la recharge de la batterie de bord. Cette consigne de courant peut dépendre de l'état de charge et/ou de santé et/ou de la température de la batterie de bord.

Selon une première variante de réalisation, le procédé de charge de la batterie de bord calcule un taux de mise en configuration de charge (par exemple sa mise en série ou la mise en série du chargeur) de la batterie de bord avec la batterie d'entraînement et le moteur, en tenant compte de la consigne définie et du courant moyen lm qui circule. Pour cela, la batterie de bord est alternativement reliée et déconnectée du circuit de liaison du système de gestion électrique selon un rapport cyclique moyen qui permet d'atteindre un compromis optimal pour atteindre la charge de la batterie de bord tout en perturbant au minimum le fonctionnement du moteur d'entraînement. Une rétroaction du taux moyen de mise en série de la batterie de bord est mise en oeuvre, pour atteindre effectivement le taux recherché.

Selon une seconde variante de réalisation, le procédé de charge de la batterie de bord privilégie la mise en série et donc la charge de cette batterie lorsque le courant lm du système est faible, pour éviter des pics de courant élevés. Dans ce cas, le procédé comprend une étape de comparaison du courant lm avec une valeur maximale choisie, et ne relie la batterie de bord au système de gestion que si le courant est inférieur à cette valeur maximale choisie. Naturellement, cette valeur maximale de courant est choisie de manière compatible avec l'obtention du courant moyen de recharge de la batterie correspondant à la consigne de courant de charge souhaitée.

Les procédés décrits précédemment, de même que les conditions de mise en configuration de charge de la batterie de bord sont combinables, cumulables.

La figure 16 représente des courbes d'évolution en fonction du temps de paramètres électriques dans un scénario choisi à titre d'exemple, pour illustrer le fonctionnement du procédé de gestion d'un système électrique à deux batteries tel que décrit précédemment. La courbe 100 représente la tension aux bornes de la batterie d'entraînement en fonction du temps t, la courbe 101 cette tension diminuée en cas de mise en charge de la batterie de bord du fait de la perte de tension engendrée, et la courbe 102 la tension minimale requise en entrée du convertisseur DC/DC ou de l'onduleur en fonction du besoin du moteur, comme explicité précédemment. Les courbes 103 et 104 illustrent respectivement le courant lm circulant entre la batterie d'entraînement et le moteur, et un courant maximal défini comme explicité précédemment.

Dans ce mode de réalisation illustré, le procédé de gestion combine notamment les deux conditions suivantes pour mettre en configuration de charge la batterie de bord sur le système de gestion :
- la perte de tension du fait de la liaison de la batterie de bord maintient la tension au-delà de la tension minimale requise, ce qui se manifeste par la courbe 101 se trouvant au-dessus de la courbe 102 ;
- le courant lm est inférieur à la valeur maximale prédéfinie, ce qui se manifeste par la courbe 103 se trouvant au-dessous de la courbe 104.

Lorsque ces deux conditions sont réunies, la batterie de bord est mise en série sur le système, ce qui lui permet de recevoir le courant représenté par la courbe 105 sur la figure 16. Ce courant correspond à un courant moyen continu représenté par la courbe 106, qui est proche du courant de consigne calculé pour une recharge optimale de la batterie de bord.

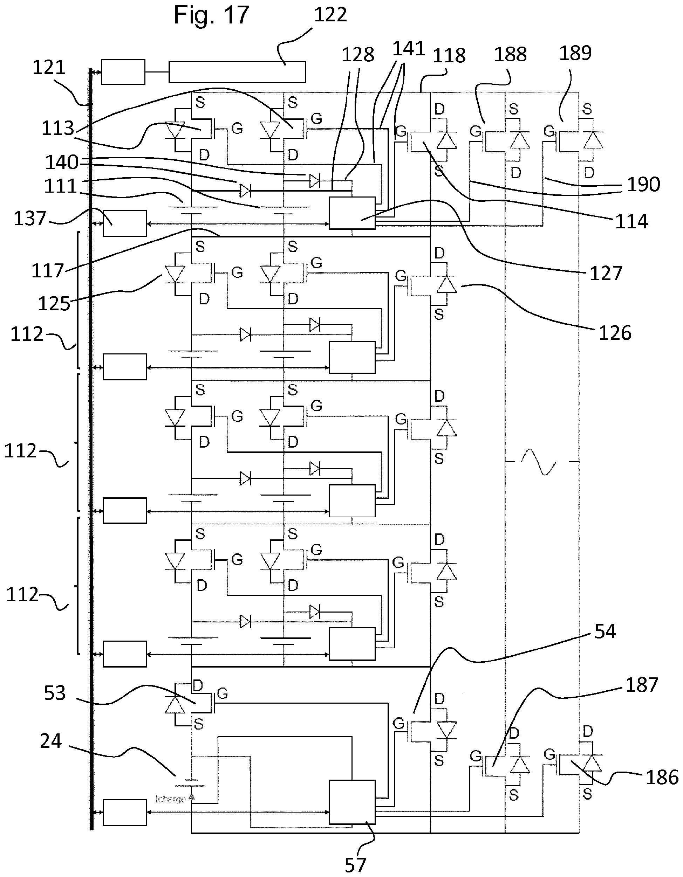

Les modes de réalisation précédents peuvent avantageusement être combinés à une architecture de batteries particulièrement avantageuse, qui forme une structure intégrée réunissant physiquement les deux batteries, telle qu'illustrée schématiquement sur les figures 17 à 21.

Dans cette architecture, la batterie d'entraînement se compose de modules 112 ou étages, aménagés en série.

La figure 17 permet de détailler à titre d'exemple simplifié la structure possible d'un étage d'une telle batterie d'entraînement. Comme cela apparaît, chaque étage est agencé entre deux niveaux de potentiel haut et bas, représentés par deux bornes haute 118 et basse 117. Chaque module 112 comprend plusieurs cellules 111, disposées en parallèle sur des branches distinctes s'étendant entre les deux niveaux de potentiel haut et bas du module. Chaque cellule 111 est associée à un interrupteur 113 qui lui est propre, disposé en série avec sa cellule (sur la branche entre les deux niveaux de potentiel haut et bas du module), qui permet de déconnecter la cellule du reste de la batterie d'entraînement par son ouverture : pour cela, nous l'appellerons « interrupteur de cellule 113 » par la suite. De plus, chaque module 112 comprend aussi un interrupteur 114 en parallèle de toutes les cellules 111 du module 112, permettant ainsi de court-circuiter l'ensemble du module : pour cela, nous l'appellerons « interrupteur de module 114 » par la suite.

Les différents interrupteurs 113, 114 sont réalisés à l'aide de transistors de puissance, de préférence des transistors de type NMOS, qui apportent un gain en conductivité dans leur état passant par rapport à des transistors PMOS qui pourraient en variante être utilisés. En variante, il est aussi possible d'utiliser d'autres types de transistors tel que des bipolaires, FET, JFET, IGBT, etc., en technologie silicium, carbure de silicium, ou arséniure de Gallium... On peut aussi placer plusieurs transistors en parallèle pour mieux assurer le passage du courant. Tous ces transistors sont associés à des diodes 125, 126 montées en parallèle, qui sont intégrées dans les transistors si ce sont des transistors de puissance discrets NMOS ou en variante sont des diodes distinctes, pour représenter leur caractéristique de laisser passer le courant en sens inverse.

Enfin, un circuit de commande 127, généralement appelé par la dénomination anglo-saxonne « driver », est alimenté électriquement par des liaisons 128 lui permettant de récupérer une différence de tension correspondant sensiblement à la tension de la cellule la plus chargée de l'étage, légèrement diminuée par une chute de tension (par exemple proche de 0,6 V) au niveau des diodes 140 disposées sur les liaisons 128. Ce circuit de commande 127 a pour fonction de générer des signaux de commande 141 vers les différents transistors formant les interrupteurs explicités ci-dessus pour les actionner, remplissant ainsi une fonction de commande des interrupteurs. De manière similaire et non représentée pour une question de clarté des figures, tous les composants électroniques du module peuvent être alimentés selon la même solution, comme un calculateur permettant d'estimer l'état des interrupteurs, un éventuel système de communication, etc. Cette alimentation locale par au moins une cellule 111 d'un module 112 concerne finalement tous les composants nécessitant une alimentation. Le circuit de commande 127, alimenté par son module 112 associé voire par un module 112 voisin, est alors isolé électriquement des autres modules et/ou des potentiels électriques extérieurs au module. Une telle réalisation présente l'avantage de supprimer le risque de piloter un certain transistor avec un potentiel très différent de celui de l'étage, qui pourrait conduire à sa destruction ou à sa mise en court-circuit. De plus, cette solution apporte l'avantage supplémentaire de permettre la réduction des connexions entre les composants du circuit de commande et la source d'alimentation, puisqu'il est possible de les regrouper à une courte distance les uns des autres et de la source de tension, notamment en positionnant les transistors au plus près des cellules à connecter. Enfin, l'utilisation de connexions très courtes réduit aussi fortement tout risque de court-circuit, par exemple entre deux modules.

Selon un mode de réalisation intéressant, chaque cellule 111 comprend de plus au moins un capteur de mesure, non représenté, d'une grandeur caractéristique de l'état de la cellule. Ce capteur de mesure peut par exemple mesurer la tension et/ou l'intensité et/ou la température au niveau de la cellule concernée. Chaque capteur de mesure est de plus relié par un dispositif de communication à un dispositif intelligent, local et/ou distant, comme un calculateur de type microcontrôleur, qui reçoit les valeurs mesurées et met en oeuvre un procédé de gestion de batterie pour déterminer un mode de fonctionnement optimisé de la batterie d'entraînement, en tenant compte des mesures effectuées.

Ce fonctionnement optimisé consiste en fait à déterminer les interrupteurs 113, 114 qui doivent être ouverts et fermés. Cette configuration des différents interrupteurs de la batterie peut être modifiée en temps réel. Cette solution permet ainsi par exemple d'écarter les cellules défectueuses ou en surchauffe, d'aiguiller le courant au sein même de chaque module, d'équilibrer chacune des cellules de la batterie en temps réel. En remarque, le courant moyen demandé par le moteur alimenté par la batterie d'entraînement est en général beaucoup plus faible que le courant crête demandé en pointe de consommation, ce qui permet à la batterie de fonctionner avec satisfaction la plupart du temps avec un nombre relativement important de cellules déconnectées, c'est-à-dire dont l'interrupteur de cellule 113 associé est ouvert, voire de modules déconnectés, c'est-à-dire dont l'interrupteur de module 114 associé est fermé, si l'ensemble d'un module est considéré comme défectueux ou en surchauffe par exemple.

La mise en oeuvre d'une telle structure, représentée schématiquement sur les figures 17 à 21, peut se faire en utilisant une ou plusieurs cartes électroniques, physiquement intégrée(s) au niveau des cellules 111 de stockage d'énergie, pour positionner les composants électroniques décrits ci-dessus au plus près des cellules et former un ensemble parfaitement intégré et compact. A titre d'exemple, une carte électronique sous la forme d'un circuit imprimé peut être positionnée sur la face inférieure ou supérieure de chaque module et la batterie d'entraînement peut alors comprendre une carte électronique entre chaque module. En variante, une même carte électronique peut réunir les composants électroniques associés à plusieurs modules différents, dont les cellules sont agencées avec un encombrement optimal autour de cette carte électronique.

Dans l'exemple décrit ci-dessus, le procédé de gestion de la batterie est mis en oeuvre par la coopération d'un circuit de commande 127 local, disposé au niveau de chaque module 112, relié à un calculateur central 122 par un bus de communication 121 et par l'intermédiaire d'une interface 137 formant une isolation galvanique. En variante non représenté, un circuit de traitement local, qui peut être un microcontrôleur disposant d'un nombre d'entrée/sortie suffisant pour interroger l'ensemble des capteurs, peut participer à la gestion intelligente de la batterie d'entraînement et de ses interrupteurs, avec ou sans assistance d'un calculateur central 122.

La figure 17 illustre une mise en oeuvre d'une telle architecture de batterie d'entraînement, comprenant à titre d'exemple quatre modules de deux cellules 111. Avantageusement, tous les modules de la batterie d'entraînement se présentent selon la structure décrite ci-dessus, et sont reliés en série, la borne inférieure 117 d'un module supérieur représentant la borne supérieure 118 d'un module inférieur. En variante, chaque module peut naturellement comprendre un nombre différent de cellules et la batterie d'entraînement peut comprendre plus de modules. La batterie d'entraînement comprend de plus quatre interrupteurs 186, 187, 188, 189, qui sont des transistors selon ce mode de réalisation, pilotés respectivement par les circuits de commande de la batterie, par des liaisons de commande 190. Ces interrupteurs forment un pont en H permettant d'inverser la sortie de la batterie d'entraînement. Ainsi, en gérant de manière calculée l'ouverture et la fermeture des différents interrupteurs de la batterie, il est possible d'émettre une tension sinusoïdale, de phase et amplitude souhaitées. Si une onde à 50 Hz est souhaitée en sortie de la batterie, il est nécessaire de procéder à 50 fermetures/ouvertures par seconde des transistors du pont en H. L'utilisation d'une telle batterie permet finalement une gestion souple en ouvrant ou fermant intelligemment les interrupteurs associés à la batterie. Elle permet notamment de remplir les fonctions des convertisseurs DC/DC ou onduleur intermédiaires généralement utilisés, et par exemple représentés sur les figures 3 à 5. Ainsi, l'utilisation d'une batterie d'entraînement basée sur une telle architecture permet la mise en oeuvre de systèmes de gestion électrique similaires à ceux représentés sur les figures 3 et 4 en supprimant le convertisseur DC/DC 23 et l'onduleur 33.

Selon la réalisation de la figure 17, la batterie de bord 24 du véhicule est de même disposée en série avec les différents modules de la batterie d'entraînement et intégrée dans la structure décrite précédemment, au niveau de l'extrémité inférieure de l'empilage des modules. Elle dispose aussi de son interrupteur série 53 et de son interrupteur parallèle 54, pilotés par un circuit de commande spécifique 57, relié aussi au même calculateur central 122 par le même bus de communication 121, par l'intermédiaire d'une interface formant une isolation galvanique. La batterie de bord peut être associée avantageusement aux composants électroniques comparables à ceux associés aux cellules de stockage d'un module et décrits précédemment. Ainsi, des capteurs de mesure de courant, et/ou de tension, et/ou de température, non représentés, peuvent être positionnés au niveau de la batterie de bord 24 et reliés par des moyens de communication au circuit de commande 57 et/ou au calculateur 122. Par cette architecture, la batterie de bord est ainsi physiquement reliée et intégrée dans la batterie d'entraînement, pour former une batterie globale à double fonction, intégrant la batterie d'entraînement d'un moteur et la batterie de bord.

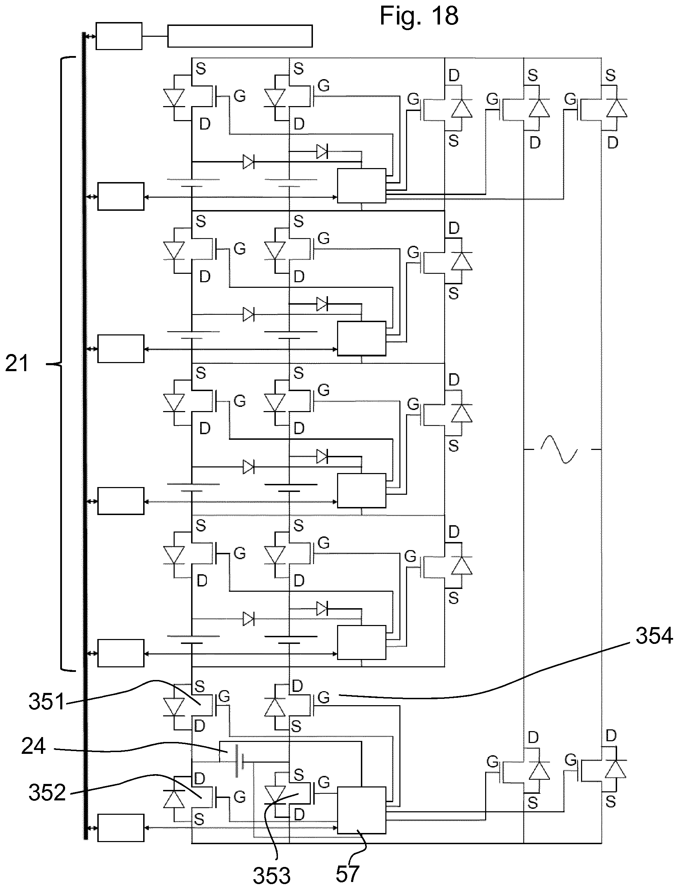

La figure 18 décrit une architecture très proche de celle de la figure 17, qui diffère en ce qu'un dispositif à plusieurs interrupteurs, similaire à celui de la figure 8, est mis en place au niveau de la batterie de bord 24. Naturellement, toutes les variantes représentées sur les figures 9 à 11 pourraient aussi être implémentées dans une telle architecture.

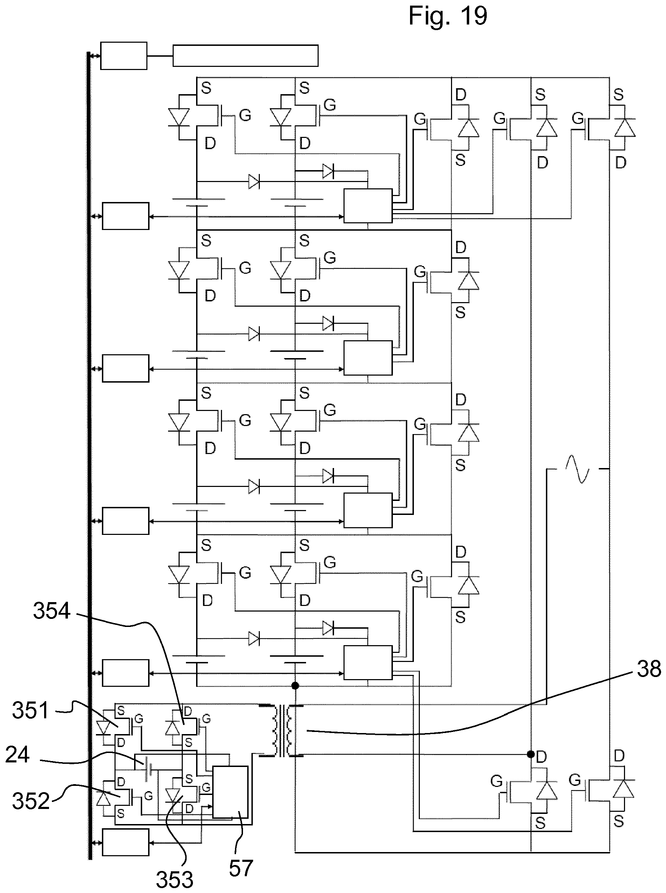

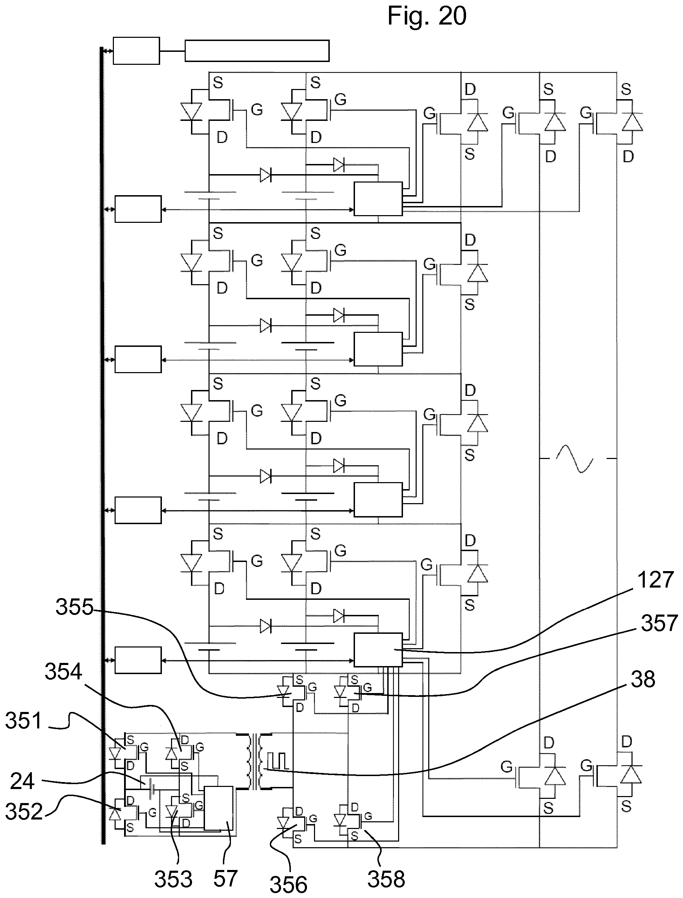

Les figures 19 et 20 décrivent de même des variantes d'architecture proches de celle de la figure 17, dans lesquelles une isolation galvanique par un transformateur 38 est mise en oeuvre au niveau de la batterie de bord 24 du véhicule, en implémentant respectivement les solutions décrites en référence avec les figures 12 et 15. En remarque, dans la réalisation de la figure 20, les interrupteurs du circuit secondaire du transformateur 38 sont alimentés par un circuit de commande 57 alimenté par la batterie de bord, alors que les interrupteurs positionnés au niveau du circuit primaire du transformateur 38 sont alimentés par un circuit de commande 127 d'un module voisin de la batterie d'entraînement.

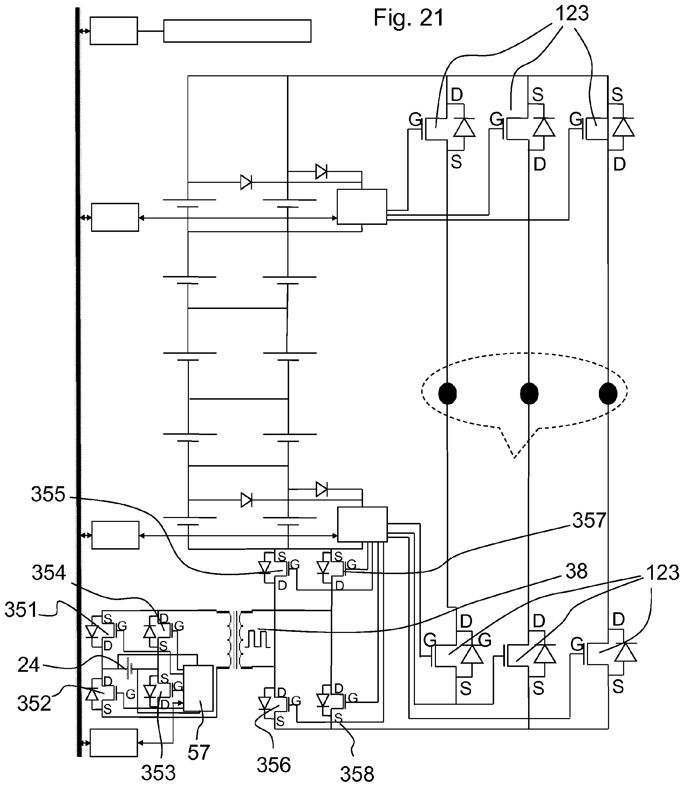

La figure 21 illustre une variante de réalisation de la figure 20, dans laquelle la batterie d'entraînement fournit une tension triphasée, grâce à une commande de trois branches d'un onduleur triphasé et un hachage périodique par des interrupteurs 123 pilotés par des circuits de commande alimentés par des étages de la batterie d'entraînement.

Comme cela a été vu précédemment, il est naturellement envisageable de combiner plusieurs des réalisations précédentes pour obtenir d'autres variantes de réalisation. De plus, la batterie d'entraînement peut comprendre toute autre architecture que celle décrite en référence avec les figures 17 à 21. Notamment, les différents étages peuvent comprendre un assemblage différent de cellules de stockage et d'interrupteurs que ceux représentés.

Les solutions décrites précédemment conviennent particulièrement bien pour un système de gestion électrique de l'énergie à bord d'un véhicule automobile, de type électrique ou hybride, comme une voiture, un avion, un train, etc.

De manière plus générale, le concept décrit précédemment peut être étendu à tout système qui combine deux sources de tension de niveaux différents, et plus précisément à un système de gestion électrique comprenant une première source de tension et une seconde source de plus basse tension. Ainsi, la batterie d'entraînement mentionnée précédemment pourrait être toute autre source de tension, comme un simple réseau électrique, un dispositif photovoltaïque, une pile à combustible, un générateur d'énergie électrique, comme une dynamo ou une turbine, etc. De même, le moteur pourrait être toute charge à alimenter. Enfin, la batterie de bord peut être remplacée par tout dispositif à plus basse tension, toute seconde source de plus basse tension qu'une batterie d'entraînement ou une première source de tension.

Ainsi, dans le cas d'un dispositif photovoltaïque, les cellules photovoltaïques de production d'énergie électrique pourraient correspondre à la batterie d'entraînement, pour produire une énergie à haute tension alimentant par exemple un réseau électrique, et un réseau à plus basse tension, à partir aussi d'un nombre restreint de cellules photovoltaïques ou d'une batterie quelconque, servant à alimenter un dispositif électronique de gestion du dispositif photovoltaïque pourrait correspondre à la batterie de bord mentionnée dans les exemples précédents. Ainsi, les cellules de stockage des batteries représentées sur les figures 17 à 21 peuvent être en variante remplacées par des cellules photovoltaïques, éventuellement associées à des capacités, ou par tout autre élément de production et/ou de stockage d'énergie.

De même, un système comprenant un système d'alimentation basse tension pour l'alimentation ou la recharge de dispositifs annexes comme un téléviseur, un ordinateur, un téléphone portable, etc., peut exploiter une solution telle que décrite en détail précédemment.

## Revendications

1. Système de gestion électrique comprenant une première source de tension reliée à une charge par un circuit de liaison et une seconde source de tension à plus basse tension, la seconde source de tension étant disposée en série avec la première source de tension et la charge de sorte que sa liaison série engendre une chute de tension sur le circuit de liaison reliant la première source de tension à la charge, **caractérisé en ce que** le circuit de liaison comprend une première liaison (25) reliant une première borne (P1) de la première source de tension à une première borne (P1') de la charge, et une deuxième liaison (29) reliant une deuxième borne (P2) de la première source à une deuxième borne (P2') de la charge, la seconde source de tension étant disposée en série sur une des première ou deuxième liaisons, et **en ce que** le système comprend un onduleur (33) ou un convertisseur DC/DC (23), électriquement lié à la première source de tension en amont de la seconde source de tension ou électriquement lié à la charge en aval de la seconde source de tension, et **en ce que** la seconde source de tension est une batterie de bord (24) et **en ce qu'**il comprend un chargeur (30) disposé en série sur le circuit de liaison reliant la première source de tension et la charge apte à permettre la charge de la batterie de bord (24), son by-pass, et/ou son isolation.

2. Système de gestion électrique selon la revendication précédente, **caractérisé en ce qu'**il comprend au moins un interrupteur (35 ; 351, 352, 353, 354 ; 355, 356, 357, 358) permettant de déconnecter ou non la seconde source de tension du circuit de liaison reliant par la première source de tension et la charge.

3. Système de gestion électrique selon la revendication précédente, **caractérisé en ce qu'**il comprend un dispositif comprenant plusieurs interrupteurs (351, 352, 353, 354 ; 355, 356, 357, 358) et/ou diodes (361, 362, 363, 364), de type pont redresseur à diodes ou interrupteurs, apte à permettre la liaison de la seconde source de tension sur le circuit de liaison quel que soit le sens de circulation du courant sur ce circuit de liaison.

4. Système de gestion électrique selon l'une des revendications 2 et 3, **caractérisé en ce que** le chargeur (30) comprend un transformateur (38) de courant, la batterie de bord (24) étant disposé sur le circuit secondaire de ce transformateur qui forme une isolation galvanique.

5. Système de gestion électrique selon la revendication précédente, et la revendication 1, **caractérisé en ce que** le circuit primaire du transformateur (38) est disposé en série sur la première ou deuxième liaison, et **en ce que** ce circuit primaire comprend plusieurs interrupteurs (355, 356, 357, 358) pour générer un courant non continu et/ou à haute fréquence et/ou au moins un by-pass de la batterie de bord (24) disposée au niveau du circuit secondaire, et/ou **en ce qu'**il comprend plusieurs interrupteurs (351, 352, 353, 354) et/ou diodes (361, 362, 363, 364), de type pont redresseur à diodes ou interrupteurs, au niveau du circuit secondaire, afin de pouvoir déconnecter la batterie de bord (24) du circuit secondaire et/ou de pouvoir l'utiliser quel que soit le sens du courant induit.

6. Système de gestion électrique selon l'une des revendications précédentes, **caractérisé en ce qu'**il comprend au moins un capteur mesurant une donnée caractéristique de la seconde source de tension et un dispositif de communication (27) pour transmettre cette donnée caractéristique à une unité de gestion.

7. Système de gestion électrique selon l'une des revendications précédentes, **caractérisé en ce que** la première source de tension comprend une structure de plusieurs modules (112) disposés en série, chaque module comprenant une borne inférieure (117) et une borne supérieure (118), et **en ce que** la seconde source de tension ou un chargeur associé est disposé(e) en série avec la première source de tension et comprend une borne commune avec un des modules (112) de la première source de tension, et comprend au moins un interrupteur (53 ; 54) permettant de déconnecter la seconde source de tension de la première source de tension.

8. Système de gestion électrique selon l'une des revendications précédentes, **caractérisé en ce qu'**il comprend au moins un circuit de commande (57) d'un interrupteur (53 ; 54) permettant de déconnecter la seconde source de tension de la première source de tension, ce circuit de commande (57) étant alimenté électriquement directement par cette seconde source de tension.

9. Système de gestion électrique selon l'une des revendications 7 et 8, **caractérisé en ce qu'**un module (112) de la première source de tension comprend au moins un interrupteur (113 ; 114 ; 186, 187, 188, 189 ; 123) et un circuit de commande (127) de l'interrupteur, ce circuit de commande étant alimenté électriquement directement par au moins une cellule (111) d'un module de la première source de tension, ce au moins un interrupteur étant parmi :
un interrupteur de cellule pour connecter ou déconnecter une cellule particulière de la première source de tension;
un interrupteur parallèle, pour by-passer ou non une cellule particulière de la première source de tension;
un interrupteur de module, pour by-passer ou non un module de la première source de tension;
un interrupteur pour by-passer ou non plusieurs modules simultanément de la première source de tension;
un interrupteur pour inverser ou non la tension en sortie de la première source de tension;
un interrupteur d'inversion série/parallèle pour disposer en série ou en parallèle certaines sous-parties de la première source de tension;
un interrupteur supplémentaire pour disposer deux cellules en série ou en parallèle.

10. Système de gestion électrique selon la revendication précédente, **caractérisé en ce qu'**il comprend au moins un capteur de mesure d'une grandeur caractéristique de l'état d'une cellule (111) de la première source de tension, et **en ce qu'**un circuit de commande (127) commande un interrupteur associé à cette cellule en fonction de la grandeur caractéristique de son état.

11. Système de gestion électrique selon l'une des revendications 7 à 10, **caractérisé en ce qu'**il comprend en outre un bus de communication (121) avec un calculateur central (122), les deux sources de tension étant reliées à ce même bus de communication vers le même calculateur central.

12. Système de gestion électrique selon l'une des revendications 7 à 11, **caractérisé en ce qu'**il comprend une carte électronique disposée entre chaque module (112) de la première source de tension et entre un module et la seconde source de tension ou une unique carte électronique sur laquelle sont disposées toutes les cellules (111) de la première source de tension et la seconde source de tension ou plusieurs cartes électroniques associées chacune à plusieurs modules (112) de la première source de tension, la seconde source de tension étant reliée à une de ces cartes électroniques.

13. Système de gestion électrique selon l'une des revendications précédentes, **caractérisé en ce que** la première source de tension est une batterie d'entraînement (21) et **en ce que** la charge est un moteur continu (22) ou triphasé (32).

14. Véhicule automobile électrique ou hybride **caractérisé en ce qu'**il comprend un système de gestion électrique selon l'une des revendications précédentes, la première source de tension étant la batterie d'entraînement (21) du véhicule, la charge étant son moteur (22 ; 32) d'entraînement, et sa seconde source de tension sa batterie de bord (24).

15. Dispositif photovoltaïque, **caractérisé en ce qu'**il comprend un système de gestion électrique selon l'une des revendications 1 à 13, la première source de tension étant un dispositif de génération électrique comprenant des cellules photovoltaïques, la charge étant un réseau électrique, et sa seconde source de tension étant une batterie ou un dispositif photovoltaïque qui fournit une basse tension à un dispositif de gestion du dispositif de génération électrique.

16. Procédé de gestion d'un système de gestion électrique selon l'une des revendications 1 à 13 comprenant deux sources de tension, **caractérisé en ce qu'**il comprend une étape de liaison de la seconde source de tension basse sur un circuit de liaison reliant la première source de tension et la charge de sorte que cette liaison série de la seconde source de tension engendre une chute de tension sur le circuit de liaison reliant la première source de tension à la charge.

17. Procédé de gestion d'un système de gestion électrique selon la revendication précédente, **caractérisé en ce qu'**il comprend une étape de compensation de la chute de tension engendrée par la liaison de la seconde source de tension basse sur le circuit de liaison.

18. Procédé de gestion d'un système de gestion électrique selon la revendication 16 ou 17, **caractérisé en ce que** la seconde source de tension est une batterie de bord (24), et **en ce qu'**il comprend une étape de charge de cette batterie de bord (24) par sa liaison série sur le circuit de liaison, cette étape de charge dépendant des étapes préalables suivantes :
- estimation de l'état de charge et/ou de santé de la seconde source de tension ;
- charge de la seconde source de tension quand la chute de tension engendrée sur le circuit de liaison est compatible avec le maintien d'une tension en entrée de la charge au-delà d'une valeur prédéfinie et/ou quand le courant circulant sur le circuit de liaison ne dépasse pas une valeur maximale prédéfinie.

19. Procédé de gestion d'un système de gestion électrique selon la revendication 17 ou 18, **caractérisé en ce qu'**il met en oeuvre une alternance de liaison et déconnexion de la seconde source de tension sur le circuit de liaison selon un rapport cyclique qui permet d'atteindre en moyenne un courant de consigne au niveau de la seconde source de tension.

20. Procédé de gestion d'un système de gestion électrique selon la revendication 16, **caractérisé en ce que** la seconde source de tension est une batterie de bord (24), et **en ce qu'**il comprend une étape de connexion en série de la batterie de bord (24) préférentiellement lorsque la charge (22) renvoie de la puissance sur la première source de tension afin de limiter la puissance retournée à cette première source et les micros-cycles associés.

## Patentansprüche

1. Elektrisches Managementsystem, welches eine erste Spannungsquelle, die mit einer Last durch eine Verbindungsschaltung verbunden ist, und eine zweite Spannungsquelle mit niedrigerer Spannung umfasst, wobei die zweite Spannungsquelle in Reihe mit der ersten Spannungsquelle und der Last angeordnet ist, so dass ihre Reihenverbindung einen Spannungsabfall in der Verbindungsschaltung verursacht, welche die erste Spannungsquelle mit der Last verbindet, **dadurch gekennzeichnet, dass** die Verbindungsschaltung eine erste Verbindung (25), die eine erste Anschlussklemme (P1) der ersten Spannungsquelle mit einer ersten Anschlussklemme (P1') der Last verbindet, und eine zweite Verbindung (29), die eine zweite Anschlussklemme (P2) der ersten Quelle mit einer zweiten Anschlussklemme (P2') der Last verbindet, umfasst, wobei die zweite Spannungsquelle zu einer von der ersten oder zweiten Verbindung in Reihe angeordnet ist, und dadurch, dass das System einen Wechselrichter (33) oder einen DC-DC-Wandler (23) umfasst, der mit der ersten Spannungsquelle auf der Einspeiseseite der zweiten Spannungsquelle elektrisch verbunden ist oder mit der Last auf der Abgangsseite der zweiten Spannungsquelle elektrisch verbunden ist, und dadurch, dass die zweite Spannungsquelle eine Bordbatterie (24) ist, und dadurch, dass es ein Ladegerät (30) umfasst, das in Reihe zu der Verbindungsschaltung angeordnet ist, welche die erste Spannungsquelle und die Last verbindet, und geeignet ist, das Laden der Bordbatterie (24), ihre Umgehung und/oder ihre Isolation zu ermöglichen.

2. Elektrisches Managementsystem nach dem vorhergehenden Anspruch, **dadurch gekennzeichnet, dass** es wenigstens einen Schalter (35; 351, 352, 353, 354; 355, 356, 357, 358) umfasst, der es ermöglicht, die zweite Spannungsquelle von der Verbindungsschaltung, welche die erste Spannungsquelle und die Last verbindet, zu trennen oder nicht.

3. Elektrisches Managementsystem nach dem vorhergehenden Anspruch, **dadurch gekennzeichnet, dass** es eine Vorrichtung, die mehrere Schalter (351, 352, 353, 354; 355, 356, 357, 358) und/oder Dioden (361, 362, 363, 364) umfasst, vom Typ einer Gleichrichterbrücke mit Dioden oder Schaltern umfasst, die geeignet ist, die Verbindung der zweiten Spannungsquelle zu der Verbindungsschaltung unabhängig von der Flussrichtung des Stroms in dieser Verbindungsschaltung zu ermöglichen.

4. Elektrisches Managementsystem nach einem der Ansprüche 2 und 3, **dadurch gekennzeichnet, dass** das Ladegerät (30) einen Stromwandler (38) umfasst, wobei die Bordbatterie (24) im Sekundärkreis dieses Wandlers angeordnet ist, welcher eine galvanische Trennung bildet.

5. Elektrisches Managementsystem nach dem vorhergehenden Anspruch und Anspruch 1, **dadurch gekennzeichnet, dass** der Primärkreis des Wandlers (38) in Reihe zur ersten oder zweiten Verbindung angeordnet ist, und dadurch, dass der Primärkreis mehrere Schalter (355, 356, 357, 358) umfasst, um einen nicht kontinuierlichen Strom und/oder einen Strom mit hoher Frequenz und/oder wenigstens eine Umgehung der im Sekundärkreis angeordneten Bordbatterie (24) zu erzeugen, und/oder dadurch, dass er mehrere Schalter (351, 352, 353, 354) und/oder Dioden (361, 362, 363, 364) vom Typ einer Gleichrichterbrücke mit Dioden oder Schaltern im Sekundärkreis umfasst, um die Bordbatterie (24) vom Sekundärkreis trennen zu können und/oder sie unabhängig von der Richtung des induzierten Stroms verwenden zu können.

6. Elektrisches Managementsystem nach einem der vorhergehenden Ansprüche, **dadurch gekennzeichnet, dass** es wenigstens einen Sensor, der einen Kennwert der zweiten Spannungsquelle misst, und eine Kommunikationsvorrichtung (27) zum Übertragen dieses Kennwertes an eine Managementeinheit umfasst.

7. Elektrisches Managementsystem nach einem der vorhergehenden Ansprüche, **dadurch gekennzeichnet, dass** die erste Spannungsquelle eine Struktur aus mehreren Modulen (112) umfasst, die in Reihe angeordnet sind, wobei jedes Modul eine untere Anschlussklemme (117) und eine obere Anschlussklemme (118) umfasst, und dadurch, dass die zweite Spannungsquelle oder ein zugeordnetes Ladegerät in Reihe mit der ersten Spannungsquelle angeordnet ist und eine gemeinsame Anschlussklemme mit einem der Module (112) der ersten Spannungsquelle umfasst und wenigstens einen Schalter (53; 54) umfasst, der es ermöglicht, die zweite Spannungsquelle von der ersten Spannungsquelle zu trennen.

8. Elektrisches Managementsystem nach einem der vorhergehenden Ansprüche, **dadurch gekennzeichnet, dass** es wenigstens einen Steuerkreis (57) eines Schalters (53; 54) umfasst, der es ermöglicht, die zweite Spannungsquelle von der ersten Spannungsquelle zu trennen, wobei dieser Steuerkreis (57) direkt von dieser zweiten Spannungsquelle mit Strom versorgt wird.

9. Elektrisches Managementsystem nach einem der Ansprüche 7 und 8, **dadurch gekennzeichnet, dass** ein Modul (112) der ersten Spannungsquelle wenigstens einen Schalter (113; 114; 186, 187, 188, 189; 123) und einen Steuerkreis (127) des Schalters umfasst, wobei dieser Steuerkreis direkt von wenigstens einer Zelle (111) eines Moduls der ersten Spannungsquelle mit Strom versorgt wird, wobei dieser wenigstens eine Schalter einer ist von:
einem Zellenschalter, um eine bestimmte Zelle der ersten Spannungsquelle zu verbinden oder zu trennen;
einem Parallel-Schalter, um eine bestimmte Zelle der ersten Spannungsquelle zu umgehen oder nicht;
einem Modulschalter, um ein Modul der ersten Spannungsquelle zu umgehen oder nicht;
einem Schalter, um mehrere Module der ersten Spannungsquelle gleichzeitig zu umgehen oder nicht;
einem Schalter, um die Spannung am Ausgang der ersten Spannungsquelle zu invertieren oder nicht;
einem Schalter zur Reihen-Parallel-Umschaltung, um bestimmte Unterabschnitte der ersten Spannungsquelle in Reihe oder parallel anzuordnen;
einem zusätzlichen Schalter, um zwei Zellen in Reihe oder parallel anzuordnen.

10. Elektrisches Managementsystem nach dem vorhergehenden Anspruch, **dadurch gekennzeichnet, dass** es wenigstens einen Sensor zur Messung einer Kenngröße des Zustands einer Zelle (111) der ersten Spannungsquelle umfasst, und dadurch, dass ein Steuerkreis (127) einen dieser Zelle zugeordneten Schalter in Abhängigkeit von der Kenngröße ihres Zustands steuert.

11. Elektrisches Managementsystem nach einem der Ansprüche 7 bis 10, **dadurch gekennzeichnet, dass** es außerdem einen Kommunikationsbus (121) mit einem Zentralrechner (122) umfasst, wobei die zwei Spannungsquellen mit eben diesem Kommunikationsbus zu demselben Zentralrechner verbunden sind.

12. Elektrisches Managementsystem nach einem der Ansprüche 7 bis 11, **dadurch gekennzeichnet, dass** es eine Leiterplatte umfasst, die zwischen jeweiligen Modulen (112) der ersten Spannungsquelle und zwischen einem Modul und der zweiten Spannungsquelle angeordnet sind, oder eine einzige Leiterplatte, auf welcher alle Zellen (111) der ersten Spannungsquelle und die zweite Spannungsquelle angeordnet sind, oder mehrere Leiterplatten, die jeweils mehreren Modulen (112) der ersten Spannungsquelle zugeordnet sind, wobei die zweite Spannungsquelle mit einer dieser Leiterplatten verbunden ist.

13. Elektrisches Managementsystem nach einem der vorhergehenden Ansprüche, **dadurch gekennzeichnet, dass** die erste Spannungsquelle eine Antriebsbatterie (21) ist, und dadurch, dass die Last ein Gleichstrommotor (22) oder Drehstrommotor (32) ist.

14. Elektro- oder Hybridkraftfahrzeug, **dadurch gekennzeichnet, dass** es ein elektrisches Managementsystem nach einem der vorhergehenden Ansprüche umfasst, wobei die erste Spannungsquelle die Antriebsbatterie (21) des Fahrzeugs ist, die Last sein Antriebsmotor (22; 32) ist und seine zweite Spannungsquelle seine Bordbatterie (24) ist.

15. Photovoltaische Vorrichtung, **dadurch gekennzeichnet, dass** sie ein elektrisches Managementsystem nach einem der Ansprüche 1 bis 13 umfasst, wobei die erste Spannungsquelle eine Stromerzeugungsvorrichtung ist, welche Photovoltaikzellen umfasst, die Last ein Stromnetz ist und ihre zweite Spannungsquelle eine Batterie oder eine photovoltaische Vorrichtung ist, die einer Managementvorrichtung der Stromerzeugungsvorrichtung eine Niederspannung liefert.

16. Managementverfahren eines elektrischen Managementsystems nach einem der Ansprüche 1 bis 13, das zwei Spannungsquellen umfasst, **dadurch gekennzeichnet, dass** es einen Schritt der Verbindung der zweiten Niederspannungsquelle auf einer Verbindungsschaltung umfasst, welche die erste Spannungsquelle und die Last verbindet, derart, dass diese Reihenverbindung der zweiten Spannungsquelle einen Spannungsabfall in der Verbindungsschaltung verursacht, welche die erste Spannungsquelle mit der Last verbindet.

17. Managementverfahren eines elektrischen Managementsystems nach dem vorhergehenden Anspruch, **dadurch gekennzeichnet, dass** es einen Schritt der Kompensation des Spannungsabfalls umfasst, der durch die Verbindung der zweiten Niederspannungsquelle mit der Verbindungsschaltung verursacht wird.

18. Managementverfahren eines elektrischen Managementsystems nach Anspruch 16 oder 17, **dadurch gekennzeichnet, dass** die zweite Spannungsquelle eine Bordbatterie (24) ist, und dadurch, dass es einen Schritt des Ladens dieser Bordbatterie (24) über ihre Reihenverbindung mit der Verbindungsschaltung umfasst, wobei dieser Schritt des Ladens von den folgenden vorausgehenden Schritten abhängt:
- Schätzung des Ladezustands und/oder Gesundheitszustands der zweiten Spannungsquelle;
- Laden der zweiten Spannungsquelle, wenn der in der Verbindungsschaltung verursachte Spannungsabfall mit dem Halten einer Spannung am Eingang der Last oberhalb eines vordefinierten Wertes vereinbar ist, und/oder wenn der in der Verbindungsschaltung fließende Strom einen vordefinierten maximalen Wert nicht überschreitet.

19. Managementverfahren eines elektrischen Managementsystems nach Anspruch 17 oder 18, **dadurch gekennzeichnet, dass** es eine Wechselfolge von Verbindung und Trennung der zweiten Spannungsquelle und der Verbindungsschaltung gemäß einem Tastverhältnis anwendet, welches ermöglicht, im Durchschnitt einen Sollstrom an der zweiten Spannungsquelle zu erreichen.

20. Managementverfahren eines elektrischen Managementsystems nach Anspruch 16, **dadurch gekennzeichnet, dass** die zweite Spannungsquelle eine Bordbatterie (24) ist, und dadurch, dass es einen Schritt der Reihenverbindung der Bordbatterie (24) vorzugsweise dann umfasst, wenn die Last (22) Leistung an die erste Spannungsquelle zurückliefert, um die an diese erste Quelle zurückgelieferte Leistung und die zugehörigen Mikrozyklen zu begrenzen.

## Claims

1. Electrical management system comprising a first voltage source linked to a load by a linking circuit and a second voltage source at lower voltage, the second voltage source can be arranged in series with the first voltage source and the load so that its series linking causes a voltage drop over the linking circuit linking the first voltage source to the load, **characterized in that** the linking circuit comprises a first link (25) linking a first terminal (P1) of the first voltage source to a first terminal (P1') of the load, and a second link (29) linking a second terminal (P2) of the first source to a second terminal (P2') of the load, the second voltage source being arranged in series with one of the first or second links, and **characterized in that** it comprises an inverter (33) and/or a DC/DC converter (23), electrically attached to the first voltage source upstream of the second voltage source or electrically attached to the load downstream of the second voltage source, and **characterized in that** the second voltage source is an onboard battery (24) and **in that** it comprises a charger (30) arranged in series with the linking circuit linking the first voltage source and the load able to allow the charging of the onboard battery (24), its by-passing, and/or its isolation.

2. Electrical management system according to the preceding claim, **characterized in that** it comprises at least one switch (35; 351, 352, 353, 354; 355, 356, 357, 358) making it possible to disconnect or otherwise the second voltage source from the linking circuit linking the first voltage source and the load.

3. Electrical management system according to the preceding claim, **characterized in that** it comprises a device comprising several switches (351, 352, 353, 354; 355, 356, 357, 358) and/or diodes (361, 362, 363, 364), of the type of a rectifier bridge based on diodes or switches, able to allow the linking of the second voltage source on the linking circuit whatever the direction of flow of the current on this linking circuit.

4. Electrical management system according to one of Claims 2 or 3, **characterized in that** the charger (30) comprises a transformer (38), the onboard battery (24) being arranged on the secondary circuit of this transformer which forms a galvanic isolation.

5. Electrical management system according to the preceding claim, and Claim 1, **characterized in that** the primary circuit of the transformer (38) is arranged in series with the first or second link, and **in that** this primary circuit comprises several switches (355, 356, 357, 358) for generating a non-continuous and/or high-frequency current and/or at least one by-pass of the onboard battery (24) arranged at the level of the secondary circuit, and/or **in that** it comprises several switches (351, 352, 353, 354) and/or diodes (361, 362, 363, 364), of the type of a rectifier bridge based on diodes or switches, at the level of the secondary circuit, so as to be able to disconnect the onboard battery (24) from the secondary circuit and/or to be able to use it whatever the direction of the induced current.

6. Electrical management system according to one of the preceding claims, **characterized in that** it comprises at least one sensor measuring a datum characteristic of the second voltage source and a communication device (27) for transmitting this characteristic datum to a management unit.

7. Electrical management system according to one of the preceding claims, **characterized in that** the first voltage source comprises a structure of several modules (112) arranged in series, each module comprising a lower terminal (117) and an upper terminal (118), and **in that** the second voltage source or an associated charger is arranged in series with the first voltage source and comprises a terminal common to one of the modules (112) of the first voltage source, and comprises at least one switch (53; 54) making it possible to disconnect the second voltage source from the first voltage source.

8. Electrical management system according to one of the preceding claims, **characterized in that** it comprises at least one control circuit (57) for a switch (53; 54) making it possible to disconnect the second voltage source from the first voltage source, this control circuit (57) being energized electrically directly by this second voltage source.

9. Electrical management system according to one of Claims 7 or 8, **characterized in that** a module (112) of the first voltage source comprises at least one switch (113; 114; 186, 187, 188, 189; 123) and a control circuit (127) for the switch, this control circuit being energized electrically directly by at least one cell (111) of a module of the first voltage source, this at least one switch being from among:
- a cell switch for connecting or disconnecting a particular cell of the first voltage source;
- a parallel switch, for optionally by-passing a particular cell of the first voltage source;
- a module switch, for optionally by-passing a module of the first voltage source;
- a switch for optionally by-passing several modules simultaneously of the first voltage source;
- a switch for optionally inverting the voltage output by the first voltage source;
- a series/parallel inversion switch for arranging in series or in parallel certain sub-parts of the first voltage source;
- an additional switch for arranging two cells in series or in parallel.

10. Electrical management system according to the preceding claim, **characterized in that** it comprises at least one sensor for measuring a quantity characteristic of the state of a cell (111) of the first voltage source, and **in that** a control circuit (127) controls a switch associated with this cell as a function of the quantity characteristic of its state.

11. Electrical management system according to one of Claims 7 to 10, **characterized in that** it furthermore comprises a communication bus (121) for communicating with a central computer (122), the two voltage sources being linked to this same communication bus towards the same central computer.

12. Electrical management system according to one of Claims 7 to 11, **characterized in that** it comprises an electronic board arranged between each module (112) of the first voltage source and between a module and the second voltage source or a single electronic board on which are arranged all the cells (111) of the first voltage source and the second voltage source or several electronic boards each associated with several modules (112) of the first voltage source, the second voltage source being linked to one of these electronic boards.

13. Electrical management system according to one of the preceding claims, **characterized in that** the first voltage source is a propulsion battery (21) and **in that** the load is a DC motor (22) or three-phase motor (32).

14. Electric or hybrid automotive vehicle **characterized in that** it comprises an electrical management system according to one of the preceding claims, the first voltage source being the propulsion battery (21) of the vehicle, the load being its propulsion motor (22; 32), and its second voltage source its onboard battery (24).

15. Photovoltaic device, **characterized in that** it comprises an electrical management system according to one of Claims 1 to 13, the first voltage source being an electrical generating device comprising photovoltaic cells, the load being an electrical network, and its second voltage source being a battery or a photovoltaic device which provides a low voltage to a device for managing the electrical generating device.

16. Method of management of an electrical management system according to one of Claims 1 to 13 comprising two voltage sources, **characterized in that** it comprises a step of linking the second low voltage source with a linking circuit linking the first voltage source and the load so that this series linking of the second voltage source causes a voltage drop over the linking circuit linking the first voltage source to the load.

17. Method of management of an electrical management system according to the preceding claim, **characterized in that** it comprises a step of compensating the voltage drop caused by the linking of the second low voltage source with the linking circuit.

18. Method of management of an electrical management system according to Claim 16 or 17, **characterized in that** the second voltage source is an onboard battery (24), and **in that** it comprises a step of charging this onboard battery (24) through its series linking with the linking circuit, this charging step depending on the following prior steps:
- estimation of the state of charge and/or state of health of the second voltage source;
- charging of the second voltage source when the voltage drop caused on the linking circuit is compatible with the maintaining of a voltage at the input of the load beyond a predefined value and/or when the current flowing in the linking circuit does not exceed a predefined maximum value.

19. Method of management of an electrical management system according to Claim 17 or 18, **characterized in that** it implements an alternation of linking and disconnection of the second voltage source on the linking circuit according to a duty cycle which makes it possible to achieve on average a setpoint current at the level of the second voltage source.

20. Method of management of an electrical management system according to Claim 16, **characterized in that** the second voltage source is an onboard battery (24), and **in that** it comprises a step of connection in series of the onboard battery (24) preferably when the load (22) returns power on the first voltage source so as to limit the power returned to this first source and the associated micros-cycles.
